# EUROPEAN PATENT SPECIFICATION

(11) **EP 2 412 588 B1**
(45) Date of publication and mention of the grant of the patent: **10.05.2017**
(21) Application number: 11175190.5
(22) Date of filing: 25.07.2011
(51) Int. Cl.: B60R 25/10

(54) **Motorcycle and theft reporting device installed in the motorcycle**
Motorrad und in dem Motorrad installierte Diebstahlmeldungsvorrichtung
Motocyclette et dispositif de signalement de vol installé sur la motocyclette

(30) Priority: 26.07.2010 JP 2010166956
(43) Date of publication of application: 01.02.2012
(73) Proprietor: Yamaha Hatsudoki Kabushiki Kaisha, Iwata-shi, Shizuoka 438-8501 (JP)
(72) Inventor: Sugiyama, Yuichi, Iwata-shi, Shizuoka 438-8501 (JP)
(74) Representative: Grünecker Patent- und Rechtsanwälte PartG mbB

(56) References cited:
- JP-A- 2003 112 606
- US-A1- 2007 018 797

## Description

### BACKGROUND OF THE INVENTION

### 1. Field of the Invention

The present invention relates to a motorcycle and a theft reporting device installed in the motorcycle, and more particularly, to a technology for enhancing accuracy of theft detection. A theft reporting device according to the preamble of claim 1 is known from US 2007/018797.

### 2. Description of the Related Art

Japanese Patent Application Laid-open No. 2002-362448 discloses a theft reporting device for a vehicle with a positional information acquiring function utilizing the Global Positioning System (GPS) and a radio communication function. The theft reporting device is provided with an acceleration sensor, and when the acceleration sensor detects an abnormal vibration, the theft reporting device determines that the vehicle is stolen. At this time, the theft reporting device uses its radio communication function to transmit current positional information of the vehicle to a service center. The service center uses the positional information to help locating the stolen vehicle.

### SUMMARY OF THE INVENTION

In the event of vehicle theft, the thief may remove a battery mounted on the vehicle to stop activation of the theft reporting device. Therefore, when the theft reporting device determines the battery removal as the event of theft as well as the abnormal vibration of the vehicle, theft detection may become more accurate.

As an example of battery removal determination processing, there may be conceived processing of determining that a battery is removed when the battery voltage keeps below a preset threshold. However, the battery voltage may keep below the threshold when the battery is drained (the battery runs out) as well as when the battery is removed. For that reason, this processing ends up with erroneous determination of theft from the battery drain.

The present invention has been made in view of the above-mentioned problem, and it is therefore an object of the present invention to enhance accuracy of theft detection in a motorcycle and a theft reporting device with a radio communication function.

In order to solve the above-mentioned problem, a theft reporting device according to the present invention includes a voltage monitoring unit, a voltage difference calculating section, a theft determination section, and a radio communication unit. The voltage monitoring unit monitors a voltage of a battery. The voltage difference calculating section calculates a drop amount of the voltage in a predetermined time interval based on voltages detected by the voltage monitoring unit at the predetermined time interval. The theft determination section determines whether or not a vehicle is stolen, based on whether or not the drop amount of the voltage has exceeded a predetermined drop amount threshold. The radio communication unit transmits when it is determined that the vehicle is stolen, to thereby report that the vehicle is stolen.

In order to solve the above-mentioned problem, a motorcycle according to the present invention includes the above-mentioned theft reporting device.

According to the present invention, the erroneous determination occurring between the battery removal and the battery drain in which the voltage of the battery gradually decreases, can be prevented, with the result that the accuracy of the theft detection can be enhanced. In the present invention, the voltage monitoring unit may detect the voltage of the battery directly or may monitor the voltage of the battery indirectly by detecting a voltage downstream of another circuit or device, namely, a voltage which becomes lower than the output voltage of the battery.

### BRIEF DESCRIPTION OF THE DRAWINGS

In the accompanying drawings:
FIG. 1 is a side view of a motorcycle including a theft reporting device, which is exemplified as an embodiment of the present invention;
FIG. 2 is a block diagram illustrating the theft reporting device and devices connected thereto;
FIG. 3 is an explanatory graph illustrating an overview of processing executed by a control unit for detecting theft of a vehicle;
FIG. 4 is a block diagram illustrating functions of the control unit;
FIG. 5 is a flow chart illustrating an exemplary flow of the processing executed by the control unit;
FIG. 6 illustrates an example of temporal changes in voltage of a battery, ON/OFF state of an abnormality notification signal of a power supply circuit, clock counter, and ON/OFF state of an abnormality flag, in a case where the battery is removed; and
FIG. 7 illustrates an example of temporal changes in voltage of the battery, ON/OFF state of the abnormality notification signal of the power supply circuit, clock counter, and ON/OFF state of the abnormality flag, at a time when a starter motor is started.

### DETAILED DESCRIPTION OF THE INVENTION

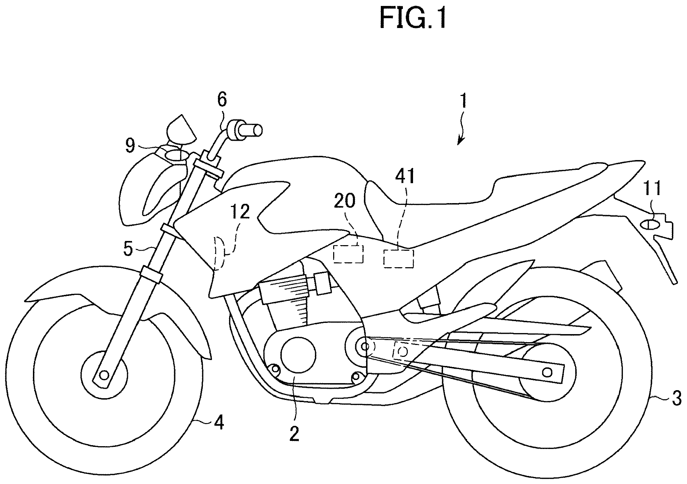

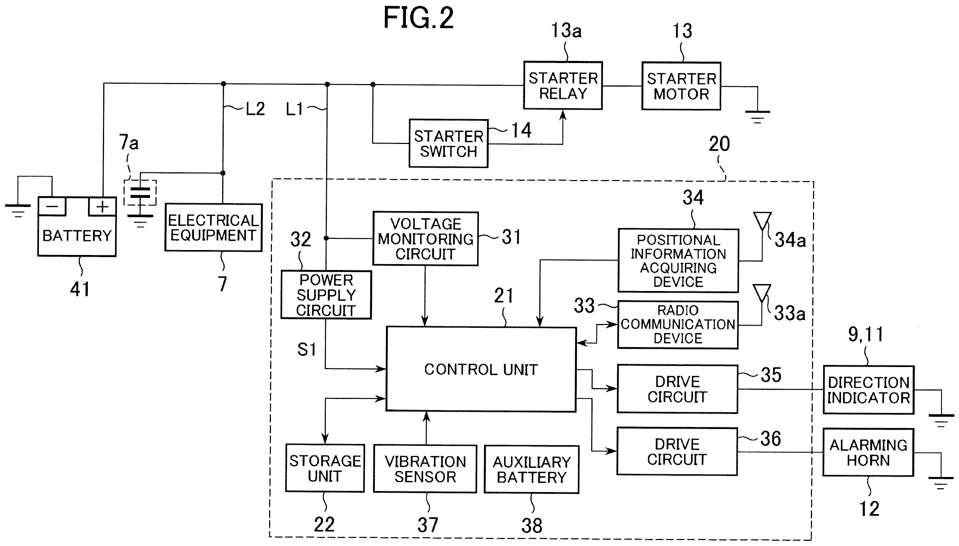

Hereinbelow, an embodiment of the present invention is described with reference to the accompanying drawings. FIG. 1 is a side view of a motorcycle 1 including a theft reporting device 20, which is exemplified as the embodiment of the present invention. FIG. 2 is a block diagram illustrating the theft reporting device 20 and devices connected thereto.

As illustrated in FIG. 1, the motorcycle 1 includes an engine 2 and a battery 41 in addition to the theft reporting device 20. Driving force from the engine 2 is transmitted to a rear wheel 3 that is arranged in the rear of the engine 2. Arranged in the front of the engine 2 is a front wheel 4. The front wheel 4 is supported by a front fork 5 at its lower ends. The front fork 5 is supported by a body frame so as to freely turning in a lateral direction. Above the front fork 5, a handle bar 6 is arranged.

In the foremost part of the body, right and left direction indicators 9 are arranged, and also in the rearmost part of the body, right and left direction indicators 11 are arranged. The handle bar 6 is provided with a switch (not shown) of direction indicators 9 and 11. The direction indicators 9 and 11 are turned on in response to a rider's switch operation to indicate a traveling direction of the vehicle. Further, the motorcycle 1 includes an alarming horn 12. The handle bar 6 is also provided with a switch (not shown) of the alarming horn 12, and the alarming horn 12 produces an alarm sound in response to a rider's switch operation.

In this example, as illustrated in FIG. 2, the direction indicators 9 and 11 and the alarming horn 12 are connected to the theft reporting device 20. The theft reporting device 20 activates the direction indicators 9 and 11 and the alarming horn 12 when it is determined that the vehicle is stolen. Control of the theft reporting device 20 is described later.

As illustrated in FIG. 2, the motorcycle 1 includes a starter motor 13 for starting the engine 2. The starter motor 13 is connected to the battery 41 through the intermediation of a starter relay 13a. When the starter relay 13a is turned on, the starter motor 13 is driven by electric power supplied from the battery 41, to thereby start the engine 2.

The starter relay 13a is connected to one contact point of a starter switch 14. Another contact point of the starter switch 14 is connected to the battery 41. The starter switch 14 is operated by the rider to turn on and off the starter relay 13a.

Electrical equipment 7 is further connected to the battery 41 through the intermediation of a power supply line L2. The electrical equipment 7 is various kinds of electrical equipment mounted on the vehicle, including, for example, lamps such as a head lamp and a tail lamp, and meters such as a speedometer. The electrical equipment 7 is provided with a smoothing circuit 7a for smoothing a voltage applied to the electrical equipment 7. The smoothing circuit 7a includes a capacitor.

The battery 41 is charged by a generator (not shown) that generates electric power through the drive of the engine 2, to thereby supply electric power to the electrical equipment 7, the starter motor 13, the theft reporting device 20, and the like.

The theft reporting device 20 has a positional information acquiring function utilizing the Global Positioning System (GPS) or the like, and a radio communication function utilizing a two-way communication system such as a mobile phone network. The theft reporting device 20 determines whether or not the vehicle is stolen. And then, when the theft reporting device 20 determines that the vehicle is stolen, notifies a predetermined service center of positional information of the vehicle through radio communication. Based on the positional information of the vehicle received from the theft reporting device 20, the service center, for example, tracks the vehicle to help locating the vehicle.

As illustrated in FIG. 2, the theft reporting device 20 includes a control unit 21, a storage unit 22, a voltage monitoring circuit 31, a power supply circuit 32, a positional information acquiring device 34, a radio communication device 33, drive circuits 35 and 36, a vibration sensor 37, and an auxiliary battery 38.

The control unit 21 includes a central processing unit (CPU). The control unit 21 operates according to a program stored in the storage unit 22 in advance, to thereby control the entire theft reporting device 20. The storage unit 22 includes a read only memory (ROM) and a random access memory (RAM) provided with the above-mentioned program and also function as a storage area used for processing procedures of the control unit 21. Further, the storage unit 22 holds unique information of the vehicle (identification information assigned to each vehicle). The unique information is transmitted to the above-mentioned service center along with the positional information of the vehicle when the vehicle is stolen.

The power supply circuit 32 is connected to an output terminal of the battery 41. The power supply circuit 32 converts electric power supplied from the battery 41 into drive power for the respective devices included in the theft reporting device 20, and supplies the drive power to the respective devices. Specifically, the power supply circuit 32 includes a DC-DC converter and a regulator to convert a voltage of the battery 41 into an operation voltage for the respective devices.

In this example, when the voltage of the electric power supplied from the battery 41 becomes lower than a predetermined value (hereinafter, referred to as switching voltage Vs), the power supply circuit 32 inputs a signal indicating the fact (hereinafter, referred to as abnormality notification signal) to the control unit 21. When receiving the abnormality notification signal, the control unit 21 turns on a switch (not shown) to activate the auxiliary battery 38. With this operation, the auxiliary battery 38 supplies, to the respective devices constituting the theft reporting device 20 including the control unit 21, drive electric power for the respective devices in place of the battery 41.

The voltage monitoring circuit 31 serves as a circuit for monitoring the voltage of the battery 41. In this example, the voltage monitoring circuit 31 is connected to a power supply line L1 connecting the power supply circuit 32 and the battery 41, and detects a voltage upstream of the power supply circuit 32 (in other words, output voltage of the battery 41). The voltage monitoring circuit 31 includes an A/D conversion circuit. The voltage monitoring circuit 31 converts, in a predetermined sampling period, the detected voltage into a digital signal that can be processed by the control unit 21, and inputs the digital signal to the control unit 21. The voltage detected by the voltage monitoring circuit 31 is not limited to the voltage upstream of the power supply circuit 32. The voltage monitoring circuit 31 may detect, for example, a voltage downstream of the power supply circuit 32 to monitor the voltage of the battery 41 indirectly.

The positional information acquiring device 34 serves as a device for acquiring positional information of the vehicle. The positional information acquiring device 34 includes, for example, a GPS receiver. The positional information acquiring device 34 calculates current positional information of the vehicle based on information received from a GPS satellite via an antenna 34a, and inputs the current positional information to the control unit 21. The positional information acquiring device 34 may receive information from the GPS satellite and the control unit 21 may calculate the positional information of the vehicle based on the information. The positional information acquiring device 34 is not limited to the device utilizing the GPS satellite, and may be, for example, a device utilizing a mobile phone network to acquire the positional information of the vehicle.

The radio communication device 33 serves as a radio device for transmitting/receiving signals in accordance with a communication protocol used for, for example, a digital mobile phone. The radio communication device 33 demodulates/decodes a radio wave received via an antenna 33a, and inputs a digital signal obtained as a result to the control unit 21. Further, the radio communication device 33 modulates/encodes a signal input from the control unit 21, and transmits the resultant signal by using the antenna 33a.

The vibration sensor 37 is a sensor for detecting whether or not the vehicle is vibrating. The vibration sensor 37 includes, for example, an acceleration sensor, and inputs to the control unit 21 a signal indicating acceleration of the vehicle. Based on the signal from the vibration sensor 37, the control unit 21 determines that the vehicle is stolen when an abnormal vibration is detected, and, for example, activates the alarming horn 12.

The auxiliary battery 38 serves as a battery for driving the respective devices of the theft reporting device 20 in place of the battery 41 as described above when the battery 41 is drained (the battery 41 runs out) or when the battery 41 removed. The auxiliary battery 38 is charged by the battery 41 in a normal state.

In response to an instruction from the control unit 21, the drive circuit 35 supplies to the direction indicators 9 and 11 the electric power that is supplied from the battery 41, to thereby activate the direction indicators 9 and 11. Similarly, in response to an instruction from the control unit 21, the drive circuit 36 supplies to the alarming horn 12 the electric power that is supplied from the battery 41, to thereby activate the alarming horn 12. In this example, as described later, the control unit 21 activates the direction indicators 9 and 11 and the alarming horn 12 when the control unit 21 determines that the vehicle is stolen.

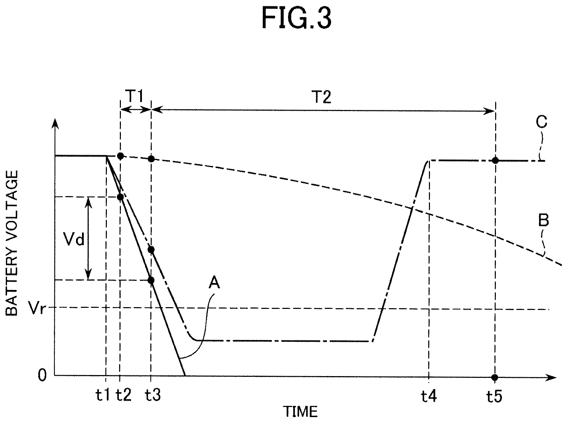

Hereinbelow, processing executed by the control unit 21 will be described. FIG. 3 is an explanatory graph illustrating an overview of processing of the control unit 21 for detecting theft of the vehicle. In FIG. 3, the axis of ordinate represents a voltage of the battery 41 detected by the voltage monitoring circuit 31, and the axis of abscissa represents time. The solid line A represents an example of a change in voltage of the battery 41 at the time when the battery 41 is removed at t1. The broken line B represents an example of a change in voltage until the battery 41 enters a state of battery drain (running out of battery, a discharge state to an extent that the engine 2 cannot be started). The chain line C represents an example of a change in voltage detected by the voltage monitoring circuit 31 at the time when the starter motor 13 is started at t1.

As indicated by the broken line B, the voltage of the battery 41 gradually decreases in the process of the battery drain. As indicated by the chain line C, the voltage detected by the voltage monitoring circuit 31 rapidly drops because an inrush current flows into the starter motor 13 at the time when the starter motor 13 is started. When the inrush current has subsided after that, the voltage detected by the voltage monitoring circuit 31 is recovered as indicated by t4.

Meanwhile, when the battery 41 is removed, as indicated by the solid line A, the voltage detected by the voltage monitoring circuit 31 rapidly drops to reach zero consequently. As described above, the electrical equipment 7 is provided with the smoothing circuit 7a. As illustrated in FIG. 2, the smoothing circuit 7a is connected in parallel to the theft reporting device 20. When the battery 41 is removed in a state in which the capacitor of the smoothing circuit 7a is charged, the capacitor is discharged and electric power is supplied to the theft reporting device 20 for a short period of time. Therefore, the voltage detected by the voltage monitoring circuit 31 does not become zero instantly in this case, but decreases according to the voltage drop of the capacitor as illustrated in FIG. 3. The control unit 21 distinguishes those three cases, and determines that the vehicle is stolen when the battery 41 is removed.

The control unit 21 performs the following processing to distinguish between the battery drain as indicated by the broken line B and the removal of the battery 41 as indicated by the solid line A. The control unit 21 determines whether or not a difference between two voltages (for example, voltages detected at t2 and t3 of FIG. 3) detected by the voltage monitoring circuit 31 at a predetermined time interval (hereinafter, referred to as detection time interval T1; see FIG. 3) has exceeded a predetermined threshold (hereinafter, referred to as drop amount threshold Vd1). That is, the control unit 21 determines whether or not a voltage drop amount Vd in the detection time interval T1 has exceeded the drop amount threshold Vd1. The detection time interval T1 herein is defined as a period of time sufficiently shorter than a period of time required for the voltage of the battery 41 to decrease by the drop amount threshold Vd1 in the process of the battery drain. The detection time interval T1 is, for example, 1 second or several seconds. In the process of the battery drain, the voltage decreases gradually. Therefore, the use of the voltage drop amount in the detection time interval T1, in other words, use of a drop rate (drop speed) of the voltage, enables the distinction between the removal of the battery 41 indicated by the solid line A and the battery drain indicated by the broken line B. When the voltage drop amount Vd is smaller than the drop amount threshold Vd1, the control unit 21 can determine that the voltage drop is not caused by the removal of the battery 41. When the voltage drop amount Vd is larger than the drop amount threshold Vd1, on the other hand, there is a possibility that the voltage drop is caused by the removal of the battery 41. When the voltage drop amount Vd is larger than the drop amount threshold Vd1, the control unit 21 further performs processing of distinguishing between the removal of the battery 41 and the start of the starter motor 13 to determine whether or not the voltage drop is caused by the removal of the battery 41.

The control unit 21 performs the following processing to distinguish between the removal of the battery 41 and the start of the starter motor 13. The control unit 21 determines whether or not the voltage detected by the voltage monitoring circuit 31 has increased after the voltage drop amount Vd exceeds the drop amount threshold Vd1 (namely, after t3). In other words, the control unit 21 determines whether or not the voltage is recovered. Based on the determination result, the control unit 21 then determines whether or not the battery 41 is removed, in other words, whether or not the vehicle is stolen. Specifically, the control unit 21 determines whether or not a voltage detected after the voltage drop amount Vd exceeds the drop amount threshold Vd1 (voltage detected at t5 of FIG. 3) becomes higher than a predetermined threshold (hereinafter, referred to as recovery determination threshold Vr ("voltage threshold" in the claims)). When the voltage is equal to or lower than the recovery determination threshold Vr, the control unit 21 then determines that the battery 41 is removed, in other words, that the vehicle is stolen. As described above, the voltage is recovered after the inrush current due to the start of the starter motor 13 subsides. Therefore, the above-mentioned processing of the control unit 21 enables the distinction between the removal of the battery 41 and the start of the starter motor 13.

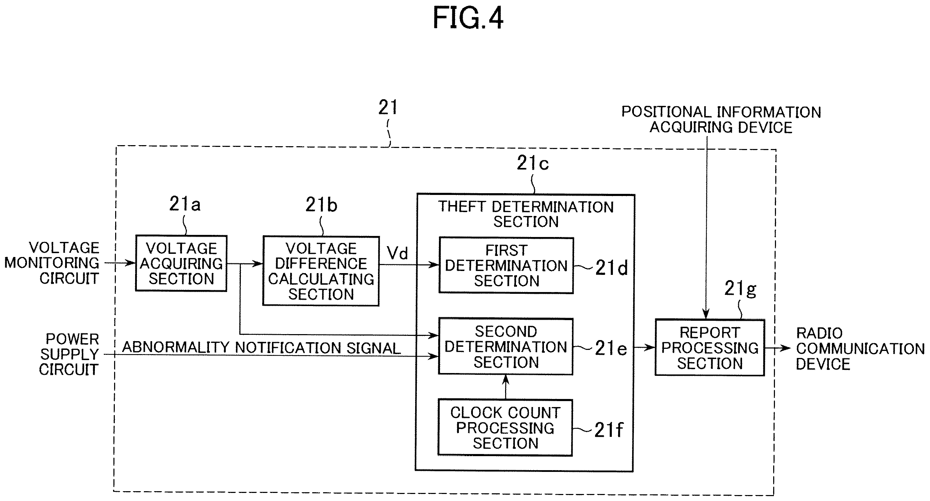

FIG. 4 is a block diagram illustrating functions of the control unit 21. As illustrated in FIG. 4, the control unit 21 includes ,as its functions, a voltage acquiring section 21a, a voltage difference calculating section 21b, a theft determination section 21c, and a report processing section 21g.

The voltage acquiring section 21a acquires a voltage corresponding to the voltage of the battery 41 from the voltage monitoring circuit 31 at every fixed time (for example, the above-mentioned detection time interval T1 or a period of time shorter than that).

The voltage difference calculating section 21b calculates the voltage drop amount Vd in the detection time interval T1 based on the two voltages detected at the detection time interval T1. The voltage difference calculating section 21b performs this calculation processing at every fixed time. In other words, the voltage difference calculating section 21b monitors constantly the voltage drop amount Vd in the detection time interval T1. For example, the voltage difference calculating section 21b calculates the voltage drop amount Vd when each of the detection time intervals T1 has passed.

For this processing, the storage unit 22 is provided with a storage area for storing a voltage acquired at a first time point (hereinafter, referred to as previously acquired voltage V0) and a voltage acquired at a second time point (hereinafter, referred to as currently acquired voltage V1) after elapse of the detection time interval T1 from the first time point. The voltage difference calculating section 21b updates the voltages V0 and V1 stored in the storage unit 22 every time the voltage acquiring section 21a acquires a new voltage. Specifically, the voltage difference calculating section 21b sets the currently acquired voltage V1 as the previously acquired voltage V0 and sets the voltage newly acquired by the voltage acquiring section 21a as the currently acquired voltage V1. Then, the voltage difference calculating section 21b performs the above-mentioned subtraction every time the update is made.

The theft determination section 21c determines, based on the voltages acquired by the voltage acquiring section 21a, whether or not the vehicle is stolen, in other words, whether or not the battery 41 is removed. The theft determination section 21c includes a first determination section 21d and a second determination section 21e.

The first determination section 21d determines whether or not the voltage drop amount Vd calculated by the voltage difference calculating section 21b has exceeded the above-mentioned drop amount threshold Vd1. The first determination section 21d performs this determination processing in every predetermined period to monitor whether or not the voltage drop amounts Vd that are sequentially calculated by the voltage difference calculating section 21b are larger than the drop amount threshold Vd1. In this example, the first determination section 21d performs this determination processing every time a new voltage drop amount Vd is calculated.

The second determination section 21e determines whether or not the voltage detected by the voltage monitoring circuit 31 has increased after the voltage drop amount Vd exceeds the drop amount threshold Vd1. Specifically, the second determination section 21e determines whether or not the voltage detected after the voltage drop amount Vd exceeds the drop amount threshold Vd1 becomes higher than the above-mentioned recovery determination threshold Vr.

For example, the second determination section 21e determines whether or not a voltage detected at a time point (t5 of FIG. 3) after elapse of a predetermined period of time (hereinafter, referred to as recovery determination delay time T2) from a time point when the voltage drop amount Vd has exceeded the drop amount threshold Vd1 (hereinafter, the time will be referred to as voltage drop detection time point (t3 of FIG. 3)) is higher than the recovery determination threshold Vr. The recovery determination delay time T2 is defined as a time longer than a period of time required for the recovery of the voltage that has drop due to the inrush current of the starter motor 13.

Further, in the example described herein, as illustrated in FIG. 4, the theft determination section 21c includes a clock count processing section 21f that starts counting a clock from the voltage drop detection time point and determining whether or not the lapse of time is longer than the recovery determination delay time T2.

Further, in the example described herein, the power supply circuit 32 inputs the abnormality notification signal to the control unit 21 when the voltage of the electric power supplied from the battery 41 is lower than the predetermined switching voltage Vs. Therefore, the second determination section 21e may determine whether or not a voltage detected at a time point after elapse of the recovery determination delay time T2 from a time point when the abnormality notification signal is input is higher than the recovery determination threshold Vr.

Note that, the second determination section 21e may perform the following processing along with the above-mentioned determination processing performed at the time point when the recovery determination delay time T2 has elapsed, or in place of the above-mentioned determination processing. Within the time range from the voltage drop time point until the recovery determination delay time T2 has elapsed (between t3 and t5 of FIG. 3), the second determination section 21e may determine whether or not the vehicle is stolen, based on an increase amount of a voltage (hereinafter, referred to as voltage increase amount Vi) detected by the voltage monitoring circuit 31 at a predetermined time interval. Specifically, the second determination section 21e may determine whether or not the voltage increase amount Vi is larger than a predetermined threshold (hereinafter, referred to as increase amount threshold Vi1), before the recovery determination delay time T2 has elapsed. For example, the second determination section 21e may determine whether or not the voltage increase amount Vi is larger than the increase amount threshold Vi1 at the above-mentioned detection time interval T1. When the voltage increase amount Vi is larger than the increase amount threshold Vi1, the second determination section 21e may determine that the voltage drop is not caused by the removal of the battery 41 because the voltage increase amount Vi is sufficiently large.

The theft determination section 21c determines that the battery 41 is removed, in other words, that the vehicle is stolen, when the processing of the second determination section 21e results in the determination that there is no increase in voltage detected by the voltage monitoring circuit 31 after the voltage drop detection time.

The report processing section 21g outputs to the radio communication device 33 current positional information of the vehicle, which is input from the positional information acquiring device 34, when the theft determination section 21c determines that the vehicle is stolen. At this time, the report processing section 21g reads the unique information of the vehicle stored, in advance, in the storage unit 22, and outputs the unique information to the radio communication device 33 as well. The radio communication device 33 transmits the positional information and the like, to the above-mentioned service center, to thereby notify the service center of the event of the theft. At this time, the report processing section 21g may output signals for activating the alarming horn 12 and the direction indicators 9 and 11 to the drive circuit 36 of the alarming horn 12 and the drive circuit 35 of the direction indicators 9 and 11.

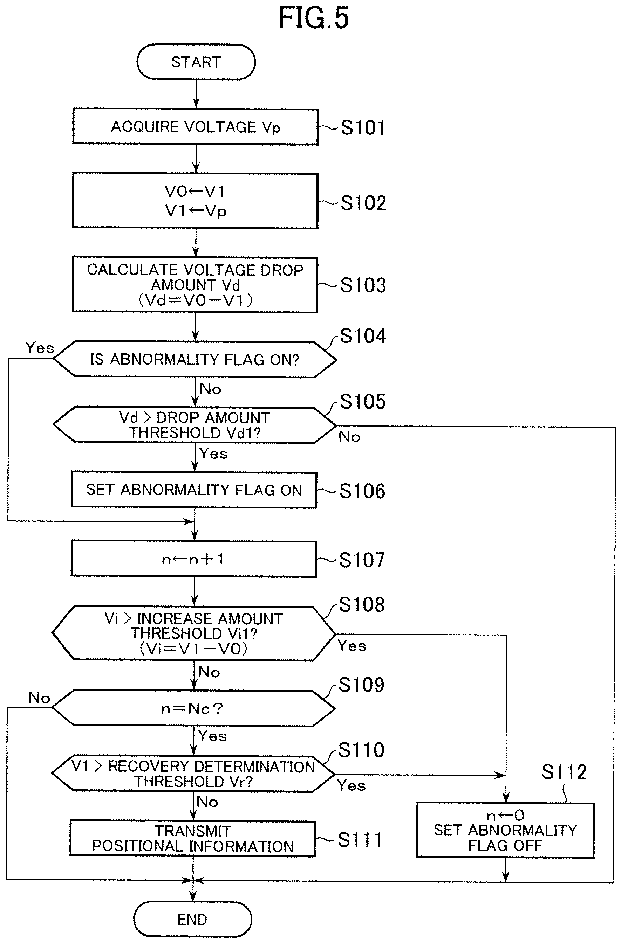

FIG. 5 is a flow chart illustrating an exemplary flow of the processing executed by the control unit 21. The control unit 21 executes processing of from S101 to S112 of FIG. 5 repeatedly at the detection time intervals T1. In other words, the detection time interval T1 is defined as a calculation period of the control unit 21 in this case.

First, the voltage acquiring section 21a acquires a voltage from the voltage monitoring circuit 31 (hereinafter, referred to as voltage Vp) (S101). The voltage difference calculating section 21b updates the previously acquired voltage V0 and the currently acquired voltage V1 that are already stored in the storage unit 22 (S102). Specifically, the voltage difference calculating section 21b sets the currently acquired voltage V1 as the previously acquired voltage V0 and sets the voltage Vp acquired in S101 as the currently acquired voltage V1. Then, the voltage difference calculating section 21b calculates the voltage drop amount Vd (Vd=V0-V1), which is a difference between the updated currently acquired voltage V1 and the updated previously acquired voltage V0 (S103).

After that, in S104, the theft determination section 21c determines whether or not the storage unit 22 stores information indicating that the voltage drop amount Vd is larger than the drop amount threshold Vd1 in the previous processing, specifically, whether or not an abnormality flag has already been ON. When the abnormality flag is not ON, the first determination section 21d determines whether or not the voltage drop amount Vd is larger than the drop amount threshold Vd1 (S105). When the voltage drop amount Vd is not larger than the drop amount threshold Vd1, the control unit 21 ends the current processing and restarts the processing from S101. When the voltage drop amount Vd is larger than the drop amount threshold Vd1 in S105, on the other hand, the theft determination section 21c sets the above-mentioned abnormality flag ON (S106). Further, the clock count processing section 21f increments a clock counter n by 1, and starts counting a clock (S107).

When the abnormality flag is already ON in S104, the voltage drop amount Vd calculated in the previous processing is determined to be already larger than the drop amount threshold Vd1. Therefore, the processing of S105 and S106 is not executed in the current processing, and the clock counter n is incremented by 1 in S107.

After the processing of S107, the theft determination section 21c determines whether or not the voltage detected by the voltage monitoring circuit 31 is being recovered. Specifically, the theft determination section 21c determines whether or not the voltage increase amount Vi (Vi=V1-V0), which is a difference obtained by subtracting the previously acquired voltage V0 from the currently acquired voltage V1, is larger than the increase amount threshold Vi1 (S108). When the voltage increase amount Vi is larger than the increase amount threshold Vi1, the voltage detected by the voltage monitoring circuit 31 is determined to be rapidly recovered. Therefore, the theft determination section 21c sets the abnormality flag OFF, and the clock count processing section 21f returns the clock counter n to an initial value of 0 (s112). Consequently, the control unit 21 ends the current processing. In other words, when the voltage increase amount Vi is larger than the increase amount threshold Vi1, it is determined that the voltage drop is not caused by the battery removal (theft). Note that, the increase amount threshold Vi1 may have the same value as the above-mentioned drop amount threshold Vd1, or may have a different value.

When the voltage increase amount Vi is not larger than the increase amount threshold Vi1 in S108, it is then determined whether or not the clock counter n has reached a predetermined clock counter determination threshold Nc, in other words, whether or not the recovery determination delay time T2 has elapsed since the voltage drop detection time point (S109). When the clock counter n has not reached the clock counter determination threshold Nc yet, the current processing is ended and the processing is restarted from S101. When the clock counter n has reached the clock counter determination threshold Nc in S109, on the other hand, the second determination section 21e determines whether or not the currently acquired voltage V1 (that is, the voltage Vp acquired in S101) is higher than the recovery determination threshold Vr (S110). When the currently acquired voltage V1 is not higher than the recovery determination threshold Vr, the control unit 21 determines that the battery 41 is removed, in other words, the theft has occurred. And then, the report processing section 21g transmits the positional information of the vehicle and the like (S111). Note that, in S110, the second determination section 21e may determine whether or not the abnormality notification signal is input from the power supply circuit 32 to the control unit 21.

When the currently acquired voltage V1 is higher than the recovery determination threshold Vr in S110, the theft determination section 21c sets the abnormality flag OFF, and the clock count processing section 21f sets the clock counter n to the initial value of 0 (S112). In other words, when the currently acquired voltage V1 is higher than the recovery determination threshold Vr in S110, it is determined that the voltage drop is not caused by the battery removal (theft). Then, the control unit 21 ends the current processing.

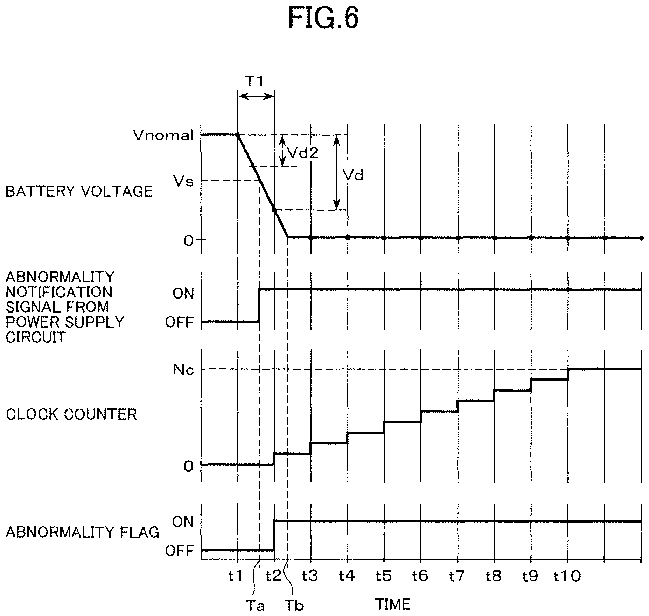

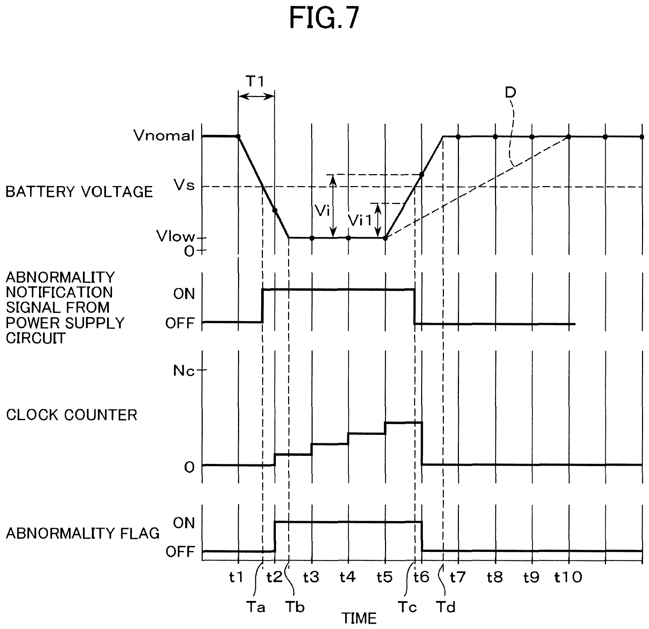

FIGS. 6 and 7 are time charts illustrating exemplary results of the processing illustrated in FIG. 5. FIGS. 6 and 7 each illustrate an example of changes in voltage of the battery 41 detected by the voltage monitoring circuit 31, ON/OFF state of the abnormality notification signal of the power supply circuit 32, clock counter counted by the clock count processing section 21f, and ON/OFF state of the abnormality flag. FIG. 6 illustrates an example of changes in a case where the battery 41 is removed while FIG. 7 illustrates an example of changes at a time when the starter motor 13 is started. In FIGS. 6 and 7, intervals of timings indicated by t1 to t10 each correspond to the above-mentioned detection time interval T1, and the voltage is acquired at each of the timings.

Referring to FIG. 6, description is first given of the changes in the case where the battery 41 is removed. When the battery 41 is removed at t1, the voltage detected by the voltage monitoring circuit 31 rapidly drops from a normal voltage Vnomal of the battery 41. Then, the voltage drop amount Vd, which is a difference between the voltage detected at t1 and the voltage detected at t2, is larger than the drop amount threshold Vd1. Therefore, the clock counter is incremented and the abnormality flag is set ON at t2. At a time point Ta, the detected voltage has reached the switching voltage Vs, which is a benchmark for switching the power source from the battery 41 to the auxiliary battery 38. Therefore, at the time point Ta, the abnormality notification signal from the power supply circuit 32 is set ON. The voltage detected by the voltage monitoring circuit 31 becomes zero after Tb. Therefore, the clock counter is sequentially incremented to reach the clock counter determination threshold Nc at t10. As a result, at t10, the theft determination section 21c determines whether or not the voltage detected by the voltage monitoring circuit 31 is higher than the recovery determination threshold Vr. In the example of FIG. 6, the voltage is not higher than the recovery determination threshold Vr, and hence the theft determination section 21c determines that the battery 41 is removed. Note that, at t10, the theft determination section 21c may determine whether or not the abnormality notification signal of the power supply circuit 32 is set ON, to thereby determine whether or not the battery 41 is removed.

Referring to FIG. 7, description is next given of the changes at the time when the starter motor 13 is started. When the starter switch 14 is turned on at t1, the voltage detected by the voltage monitoring circuit 31 rapidly drops as in the case of FIG. 6, due to the inrush current generated in the starter motor 13. Therefore, the clock counter is incremented and the abnormality flag is set ON at t2. Further, the abnormality notification signal from the power supply circuit 32 is also ON. Then at Tb, the voltage detected by the voltage monitoring circuit 31 has reached Vlow which is sufficiently lower than the normal voltage of the battery 41. In FIG. 7, the rapid drop in voltage is caused by the start of the starter motor 13. Therefore, the voltage detected by the voltage monitoring circuit 31 has temporarily reached the Vlow but starts increasing at t5. Then, the voltage of the battery 41 is higher than the switching voltage Vs at Tc. Therefore, the abnormality notification signal is set OFF at Tc.

In the example of FIG. 7, the voltage of the battery 41 is rapidly recovered from t5, and hence the voltage increase amount Vi, which is a difference between the voltage detected at t6 and the voltage detected at t5, is larger than the increase amount threshold Vi1. Therefore, as a result of the processing of S108 and S112 described above, the clock counter is returned to the initial value of 0 and the abnormality flag is set OFF at t6.

As indicated by the broken line D of FIG. 7, when the voltage of the battery 41 is gradually recovered and the voltage difference obtained by subtracting the previously acquired voltage V0 from the currently acquired voltage V1 is not larger than the increase amount threshold Vi1, the clock counter is sequentially incremented even after t5. As a result, when the clock counter has reached the clock counter determination threshold Nc, in other words, when the recovery determination delay time T2 has elapsed, comparison is made in the processing of S110 described above between the currently acquired voltage V1 and the recovery determination threshold Vr. When the currently acquired voltage V1 is higher than the recovery determination threshold Vr, the clock counter is returned to the initial value of 0 and the abnormality flag is set OFF.

As described above, the theft reporting device 20 includes: the voltage difference calculating section 21b for calculating the voltage drop amount Vd in the detection time interval T1 based on the voltages detected by the voltage monitoring circuit 31 at the detection time interval T1; and the theft determination section 21c for determining whether or not the vehicle is stolen, based on whether or not the voltage drop amount Vd has exceeded the drop amount threshold Vd1. According to the theft reporting device 20 as above, it is possible to reduce erroneous determination occurring between the removal of the battery 41 and the battery drain in which the voltage of the battery 41 gradually decreases, with the result that accuracy of theft detection can be enhanced.

The theft determination section 21c further determines whether or not the voltage detected by the voltage monitoring circuit 31 has increased after the voltage drop amount Vd exceeds the drop amount threshold Vd1. And, based on the determination result, The theft determination section 21c determines whether or not the vehicle is stolen. Therefore, it is possible to prevent erroneous determination occurring between the battery removal and the voltage drop due to the inrush current generated at the time when the starter motor 13 is started.

In particular, in the above description, the theft determination section 21c determines whether or not the voltage which is detected at the time point after elapse of the recovery determination delay time T2 from the time point when the voltage drop amount Vd has exceeded the drop amount threshold Vd1, is higher than the recovery determination threshold Vr. With this operation, it is possible to adjust the timing to determine whether or not the battery is removed, by adjusting the recovery determination delay time T2.

Further, in the above description, within the time range from when the voltage drop amount Vd has exceeded the drop amount threshold Vd1 until the recovery determination delay time T2 has elapsed, the theft determination section 21c determines whether or not the vehicle is stolen, based on the voltage increase amount Vi in the detection time interval T1. Accordingly, the theft determination section 21c can determine whether the voltage drop is caused by the inrush current flowing through the starter motor 13, or by the removal of the battery 41, even before the recovery determination delay time T2 elapses.

Further, in the above description, the theft reporting device 20 includes the power supply circuit (conversion circuit) 32 that converts the electric power supplied from the battery 41 into the drive power for the respective devices constituting the theft reporting device 20. The voltage monitoring circuit 31 detects the voltage upstream of the power supply circuit 32. With this configuration, it is possible to reduce a time lag between the change in battery voltage and the change in voltage detected by the voltage monitoring circuit 31, as compared to the case where the voltage monitoring circuit 31 detects the voltage downstream of the power supply circuit 32.

In the motorcycle 1, the theft reporting device 20 is connected in parallel to the smoothing circuit 7a of the electrical equipment 7. And hence, when the battery 41 is removed in the state in which the capacitor of the smoothing circuit 7a is charged, electric power is supplied from the smoothing circuit 7a to the theft reporting device 20 for a short while. When the battery 41 is removed in a state in which the capacitor is not charged, the voltage of the electric power supplied to the theft reporting device 20 becomes zero instantly. In other words, the drop speed of the voltage detected by the voltage monitoring circuit 31 changes depending on the operating state of the electrical equipment 7 immediately before the removal of the battery 41. If it is determined whether or not the battery 41 is removed based on whether or not the voltage detected by the voltage monitoring circuit 31 has reached a predetermined threshold, the timing to detect the vehicle is stolen therefore changes depending on the operating state of the electrical equipment 7 immediately before the removal of the battery 41. According to the motorcycle 1, it is possible to detect the battery 41 is removed at the time when the recovery determination delay time T2 has elapsed since the voltage drop detection time point irrespective of the operating state of the electrical equipment 7 immediately before the removal of the battery 41. As a result, it is possible to stabilize the timing to detect whether or not the vehicle is stolen.

Note that, the present invention is not limited to the theft reporting device 20 described above, and various modifications may be made thereto.

For example, in the above description, it is determined whether or not the voltage increase amount Vi in the detection time interval T1 becomes larger than the increase amount threshold Vi1 after the voltage drop detection time point. However, the control unit 21 does not necessarily execute this processing.

Further, the theft determination section 21c detects whether or not the battery 41 is removed, in other words, whether or not the theft has occurred, based on the change in voltage detected by the voltage monitoring circuit 31. However, the theft determination section 21c may detect whether or not the theft has occurred, based on data from the vibration sensor 37 as well as the change in voltage detected by the voltage monitoring circuit 31.

## Claims

1. A theft reporting device for a vehicle, comprising:
a voltage monitoring unit (31) for monitoring a voltage of a battery (41);
a theft determination section (21 c) for determining whether or not the vehicle is stolen;
and
a radio communication unit (33) for transmitting when it is determined that the vehicle is stolen, to thereby report that the vehicle is stolen
**characterized in that**
the theft reporting device further comprises a voltage difference calculating section (21 b) configured to calculate a drop amount of the voltage in a predetermined time interval based on voltages detected by the voltage monitoring unit (31) at the predetermined time interval; and
the theft determination section (21 c) is configured to determine whether or not the vehicle is stolen, based on whether or not the drop amount of the voltage has exceeded a predetermined drop amount threshold.

2. The theft reporting device for a vehicle according to claim 1, further comprising:
a positional information acquiring unit (34) for acquiring positional information of the vehicle; and
wherein the radio communication unit (33) is for transmitting positional information when it is determined that the vehicle is stolen, to thereby report that the vehicle is stolen.

3. The theft reporting device for a vehicle according to claim 1 or 2, wherein the theft determination section (21c) is further configured to determine whether or not the voltage detected by the voltage monitoring unit (31) has increased after the drop amount of the voltage exceeds the predetermined drop amount threshold, and based on a result of the determination, determines whether or not the vehicle is stolen.

4. The theft reporting device for a vehicle according to any one of claims 1 to 3, wherein the theft determination section (21c) is configured to determine whether or not a voltage detected after the drop amount of the voltage exceeds the predetermined drop amount threshold is higher than a predetermined voltage threshold, and based on a result of the determination, determines whether or not the vehicle is stolen.

5. The theft reporting device for a vehicle according to claim 4, wherein the theft determination section (21c) is configured to determine whether or not a voltage detected at a time point after elapse of a predetermined period of time from a time point when the drop amount of the voltage has exceeded the predetermined drop amount threshold is higher than the predetermined voltage threshold.

6. The theft reporting device for a vehicle according to claim 5, wherein the theft determination section (21c) is configured to determine whether or not the vehicle is stolen, based on an increase amount of the voltage in the predetermined time interval, within a time range from when the drop amount of the voltage has exceeded the predetermined drop amount threshold until the predetermined period of time has elapsed.

7. The theft reporting device for a vehicle according to any one of claims 1 to 6, **characterized by** further comprising a conversion circuit (32) for converting electric power supplied from the battery (41) into drive power for respective units constituting the theft reporting device.

8. The theft reporting device for a vehicle according to claim 7, wherein the voltage monitoring unit (31) is configured to detect a voltage upstream of the conversion circuit (32).

9. The theft reporting device for a vehicle according to claim 7, wherein the voltage monitoring unit (31) is configured to detect a voltage downstream of the conversion circuit (32).

10. A motorcycle, comprising the theft reporting device according to any one of claims 1 to 9.

## Patentansprüche

1. Diebstahl-Meldevorrichtung für ein Fahrzeug, die umfasst:
eine Spannungsüberwachungs-Einheit (31) zum Überwachen einer Spannung einer Batterie (41);
einen Abschnitt (21c) zur Feststellung von Diebstahl, mit dem festgestellt wird, ob das Fahrzeug gestohlen ist oder nicht; und
eine Funkkommunikations-Einheit (33), mit der gesendet wird, wenn festgestellt wird, dass das Fahrzeug gestohlen ist, um so zu melden, dass das Fahrzeug gestohlen ist,
**dadurch gekennzeichnet, dass**
die Diebstahl-Meldevorrichtung des Weiteren einen Abschnitt (21 b) zum Berechnen einer Spannungsdifferenz umfasst, der so ausgeführt ist, dass er ein Maß des Abfalls der Spannung in einem vorgegebenen Zeitintervall auf Basis in dem vorgegebenen Zeitinter-vall durch die Spannungsüberwachungs-Einheit (31) erfasster Spannungen berechnet; und
der Abschnitt (21c) zur Feststellung von Diebstahl so ausgeführt ist, dass er basierend darauf, ob das Maß des Abfalls der Spannung einen vorgegebenen Schwellenwert des Maßes des Abfalls überschritten hat oder nicht, feststellt, ob das Fahrzeug gestohlen ist oder nicht.

2. Diebstahl-Meldevorrichtung für ein Fahrzeug nach Anspruch 1, die des Weiteren umfasst:
eine Einheit (34) zum Bestimmen von Positions-Informationen des Fahrzeugs; und
wobei die Funkkommunikations-Einheit (33) dazu dient, Positions-Informationen zu senden, wenn festgestellt wird, dass das Fahrzeug gestohlen ist, um so zu melden, dass das Fahrzeug gestohlen ist.

3. Diebstahl-Meldevorrichtung für ein Fahrzeug nach Anspruch 1 oder 2, wobei der Abschnitt (21 c) zur Feststellung von Diebstahl des Weiteren so ausgeführt ist, dass er feststellt, ob die durch die Spannungsüberwachungs-Einheit (31) erfasste Spannung angestiegen ist oder nicht, nachdem das Maß des Abfalls der Spannung den vorgegebenen Schwellenwert des Maßes des Abfalls überschritten hat, und auf Basis eines Ergebnisses der Feststellung feststellt, ob das Fahrzeug gestohlen ist oder nicht.

4. Diebstahl-Meldevorrichtung für ein Fahrzeug nach einem der Ansprüche 1 bis 3, wobei der Abschnitt (21 c) zur Feststellung von Diebstahl so ausgeführt ist, dass er feststellt, ob eine Spannung, die erfasst wird, nachdem das Maß des Abfalls der Spannung den vorgegebenen Schwellenwert des Maßes des Abfalls überschritten hat, höher ist als ein vorgegebener Spannungs-Schwellenwert, und auf Basis eines Ergebnisses der Feststellung feststellt, ob das Fahrzeug gestohlen ist oder nicht.

5. Diebstahl-Meldevorrichtung für ein Fahrzeug nach Anspruch 4, wobei der Abschnitt (21 c) zur Feststellung von Diebstahl so ausgeführt ist, dass er feststellt, ob eine Spannung, die zu einem Zeitpunkt nach Verstreichen eines vorgegebenen Zeitraums von einem Zeitpunkt erfasst wird, zu dem das Maß des Abfalls der Spannung den vorgegebenen Schwellenwert des Maßes des Abfalls überschritten hat, höher ist als der vorgegebene Spannungs-Schwellenwert.

6. Diebstahl-Meldevorrichtung für ein Fahrzeug nach Anspruch 5, wobei der Abschnitt (21 c) zur Feststellung von Diebstahl so ausgeführt ist, dass er auf Basis eines Maßes des Anstiegs der Spannung in dem vorgegebenen Zeitintervall innerhalb einer Zeitspanne von dem Zeitpunkt, zu dem das Maß des Abfalls der Spannung den vorgegebenen Schwellenwert des Maßes des Abfalls überschritten hat, bis zu dem Zeitpunkt, zu dem der vorgegebene Zeitraum verstrichen ist, feststellt, ob das Fahrzeug gestohlen ist oder nicht.

7. Diebstahl-Meldevorrichtung für ein Fahrzeug nach einem der Ansprüche 1 bis 6, **dadurch gekennzeichnet, dass** sie des Weiteren eine Umwandlungs-Schaltung (32) umfasst, mit der von der Batterie (41) zugeführte elektrische Energie in Energie zum Ansteuern für jeweilige Einheiten umgewandelt wird, die die Diebstahl-Meldevorrichtung bilden.

8. Diebstahl-Meldevorrichtung für ein Fahrzeug nach Anspruch 7, wobei die Spannungs-überwachungs-Einheit (31) so ausgeführt ist, dass sie eine Spannung stromauf von der Umwandlungs-Schaltung (32) erfasst.

9. Diebstahl-Meldevorrichtung für ein Fahrzeug nach Anspruch 7, wobei die Spannungs-überwachungs-Einheit (31) so ausgeführt ist, dass sie eine Spannung stromab von der Umwandlungs-Schaltung (32) erfasst.

10. Motorrad, das die Diebstahl-Meldevorrichtung nach einem der Ansprüche 1 bis 9 umfasst.

## Revendications

1. Dispositif de signalement de vol pour un véhicule, comprenant :
une unité de surveillance de tension (31) destinée à surveiller la tension d'une batterie (41),
une section de détermination de vol (21c) destinée à déterminer si un véhicule est ou non dérobé, et
une unité de communications radio (33) destinée à émettre au moment où il est déterminé que le véhicule est dérobé, pour signaler ainsi que le véhicule est dérobé,
**caractérisé en ce que**
le dispositif de signalement de vol comprend en outre une section de calcul de différence de tensions (21b) configurée pour calculer la valeur d'une chute de la tension dans un intervalle de temps prédéterminé sur la base de tensions détectées par l'unité de surveillance de tension (31) dans l'intervalle de temps prédéterminé, et
la section de détermination de vol (21c) est configurée pour déterminer si le véhicule est ou non dérobé sur la base de ce que la valeur de la chute de tension a dépassé ou non un seuil prédéterminé de valeur de chute de tension.

2. Dispositif de signalement de vol pour un véhicule selon la revendication 1, comprenant en outre :
une unité d'acquisition d'informations de position (34) destinée à acquérir des informations de position du véhicule, et
dans lequel l'unité de communications radio (33) est destinée à transmettre les informations de position lorsqu'il est déterminé que le véhicule a été dérobé afin de signaler ainsi que le véhicule est dérobé.

3. Dispositif de signalement de vol pour un véhicule selon la revendication 1 ou la revendication 2, dans lequel la section de détermination de vol (21c) est en outre configurée pour déterminer si la tension détectée par l'unité de surveillance de tension (31) a ou non augmenté après que la valeur de la chute de tension a dépassé de seuil prédéterminé de valeur de chute de tension et, sur la base du résultat de la détermination, elle définit ainsi si le véhicule est ou non dérobé.

4. Dispositif de signalement de vol pour un véhicule selon l'une quelconque des revendications 1 à 3, dans lequel la section de détermination de vol (21c) est configurée pour déterminer si une tension, détectée après que la valeur de la chute de tension a dépassé le seuil prédéterminé de valeurs de chute de tension, est ou non supérieure à un seuil de tension prédéterminé, et, sur la base du résultat de la détermination, elle définit ainsi si le véhicule est ou non dérobé.

5. Dispositif de signalement de vol pour un véhicule selon la revendication 4, dans lequel la section de détermination de vol (21c) est configurée pour déterminer si une tension détectée à un instant après l'écoulement d'un intervalle de temps prédéterminé depuis le point dans le temps où la valeur de la chute de tension a dépassé le seuil prédéterminé de valeur de chute de tension, est ou non supérieure au seuil de tension prédéterminé.

6. Dispositif de signalement de vol pour un véhicule selon la revendication 5, dans lequel la section de détermination de vol (21c) est configurée pour déterminer si un véhicule est ou non dérobé sur la base d'une valeur d'augmentation de la tension dans l'intervalle de temps prédéterminé, à l'intérieur d'un intervalle de temps à partir du moment où la valeur de la chute de tension a dépassé le seuil prédéterminé de valeur de chute de tension jusqu'au moment où l'intervalle de temps prédéterminé s'est écoulé.

7. Dispositif de signalement de vol pour un véhicule selon l'une quelconque des revendications 1 à 6, **caractérisé en ce qu'**il comprend en outre un circuit de conversion (32) destiné à convertir l'énergie électrique fournie par la batterie (41) en énergie d'alimentation pour les unités respectives constituant le dispositif de signalement de vol.

8. Dispositif de signalement de vol pour un véhicule selon la revendication 7, dans lequel l'unité de surveillance de tension (31) est configurée pour détecter une tension en amont du circuit de conversion (32).

9. Dispositif de signalement de vol pour un véhicule selon la revendication 7, dans lequel l'unité de surveillance de tension (31) est configurée pour détecter une tension en aval du circuit de conversion (32).

10. Motocyclette comportant le dispositif de signalement de vol conforme à l'une quelconque des revendications 1 à 9.
